# EUROPEAN PATENT APPLICATION

(11) **EP 3 048 471 A1**
(43) Date of publication of application: **27.07.2016**
(21) Application number: 13891143.3
(22) Date of filing: 08.08.2013
(51) Int. Cl.: G02C 5/00

(54) **CHILDREN'S GLASSES AND PRODUCTION METHOD**

(30) Priority: 06.08.2013 ES 201331230
(71) Applicant: Paulet Vazquez, Alberto, 28660 Boadilla del Monte (Madrid) (ES)
(72) Inventor: Paulet Vazquez, Alberto, 28660 Boadilla del Monte (Madrid) (ES)
(74) Representative: Falcon Morales, Alejandro
(86) International application number: PCT/ES2013/070587
(87) International publication number: WO 2015/018949

(57) **Abstract**

The invention relates to children's glasses and to the production method thereof, in which the sidepieces (5) or elastic strap (7) are coupled to the ends of the frame (2) by means of articulated zig-zag parts (4) which allow the sidepieces to be bent both inwards and outwards in relation to the glasses. According to the invention, the frame (2), sidepieces (5), ends (6) and articulated parts (4) are made from a flexible silicone-based material, and produced by means of a thermomoulding process from a flexible silicone-based material, specifically Siliflex(TM). Furthermore, the glasses have a transparent appearance in variable colours produced by including pigments in the actual thermomoulding process.

## Description

### PURPOSE OF THE INVENTION

The invention, as expressed in the heading of this descriptive report, refers to children's glasses as well as to their manufacturing process, providing advantages and novelty features that represent an improvement compared to what is currently known in the market.

More specifically, the purpose of the invention focuses on some glasses designed for children's use which have the peculiarity of being made in a flexible silicone-based material using a thermomoulding process. This material is very light but very strong and with very stable colours that appear transparent. These glasses are the type that allows the sidepieces to be swapped for an elastic strap that fits around the head. They also have an articulated part, also made from the aforementioned flexible material that advantageously allows the sidepieces to be bent in both directions so that they can bend both towards the inside of the glasses and also outwards without misshaping or breaking.

### FIELD OF APPLICATION OF THE INVENTION

This invention's field of application is framed within the technical sector of the industry dedicated to the manufacture of glasses.

### BACKGROUND OF THE INVENTION

At present, and as a reference to the status of the technique, it should be noted that although there are multiple types and models of glasses on the market, but there are none known that have the technical characteristics of those proposed herein, as is claimed.

### EXPLANATION OF THE INVENTION

Specifically, the glasses in question have frames that are innovatively made in a flexible material which is silicone based and obtained by thermomoulding the aforementioned material which, known commercially as Shiftex™ consists of a thermomouldable polymer that is very flexible in nature and has maximum resistance to being misshaped, and at the same time being very light, similar to acetate but 35% lighter.

Frames produced in this way, in addition, show a clear appearance that provides the glasses a differentiated aesthetic character with a wide range of colours, which are obtained through the inclusion of the coloured pigments in the production thermomoulding process itself, thus forming part of the own mass of parts that make up that frame and, consequently, provides very stable colours that do not deteriorate with the passage of time.

Following on with the peculiarities of the invention, it should be noted, moreover, that the above-mentioned frames have an articulated system determined by zig-zag parts at both ends of the lenses, specially designed with the aim of increasing the flexibility of the glasses, as through these parts, in addition to the conventional folding of the sidepieces towards the inside of the glasses, they also allow them to be bent in the opposite direction without causing them any damage, i.e. the external part of the glasses, without there being any misshaping or damage, always coming back to their normal position in any of these directions, both because of the particular zig-zag structure of such parts as well as the siliflex material with which both the parts as well as the sidepieces and the rest of the frame are made from.

It is worth mentioning that the glasses have a terminal at each one of the ends of the sidepieces that, thanks to the flexible material with which they are made, can be manually adjusted to ensure they can be fastened better to the head behind the ears. In addition, these terminals can optionally have a hole to be able to fit some rings that serve as fastenings to the ends of an elastic strap so as to hold the glasses around the head at the back.

The possibility of replacing the above mentioned sidepieces with an elastic strap that completely surrounds the head is also envisaged, in which case the described rings are fitted immediately after the zig-zag parts of the elastic articulation.

In any case, the children's glasses described in this proposed invention therefore constitute an innovative structure of unknown constituents and technical features.

### DESCRIPTION OF THE DRAWINGS

To complement the description that is being made of the invention, and to better understand the characteristics that distinguish it, this report is accompanied by some drawings sheets as an integral part of it, in which the following has been represented:
Figure number 1.- Shows a perspective view of the glasses subject matter of the invention, in a production example incorporating an elastic strap at the ends of the sidepieces that subsequently closes them to the head.
Figure number 2.- Shows a perspective view of the detail of one of the articulated zig-zag parts which the glasses feature according the invention.
Figure number 3.- Shows a perspective view of the detail of the end of one of the sidepieces of the glasses, showing how they can be adjusted.

### PREFERRED PRODUCTION OF THE INVENTION

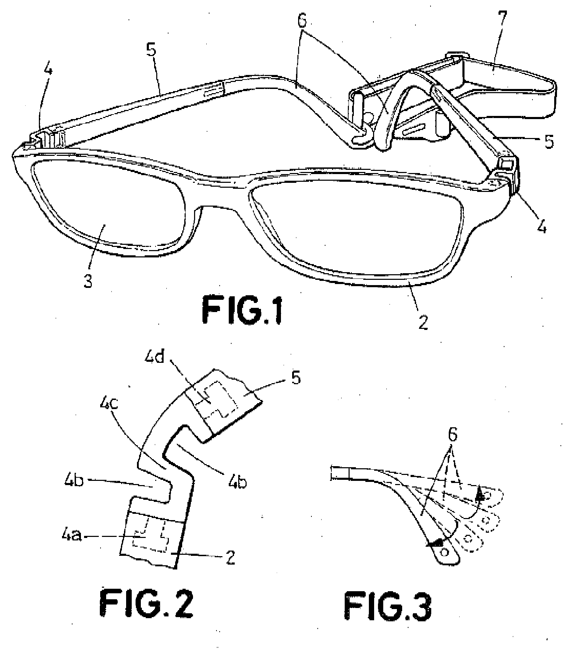

In view of the above-mentioned figures, and in accordance with the numbering adopted, a preferred production example can be seen, but not limited to children's glasses subject of the invention, which include the parts and elements that are listed and described in detail below. So, as can be seen in Figure 1, the glasses (1) in question are made up, conventionally, from a frame (2), which is made up by a support frame for the lens (3), on the side ends of which there are two articulated parts (4) which normally have sidepieces fitted (5), whose distal end consist of a curved terminal (6), to which an elastic strap is optionally attached (7), with the peculiarity that, both the frame (2) as well as the sidepieces (5), the terminal (6) and articulation parts (4) are manufactured in a flexible silicon-based material, specifically Siliflex™, and obtained using a thermomoulding process.

It is important to emphasise that the articulated parts (4), as shown in detail in Figure 2, are parts that present a zig-zag configuration that enables them to be bent both inwards, or to the inside of the glasses, as outwards, and consequently enable the sidepieces to be bent inwards or outwards (5).

In a preferred production example, each of these articulated parts (4) shows: at one of their ends, a first protuberance (4a) suitable to lodged inserted in a housing provided in the ends of the frame (2) ; in its central area, a winding shape determined by both entries (4b) on opposite sides of the it separated by a centre partition (4c) ; and in its opposite end a second protuberance (4d) that is inserted into a housing located at the end of the sidepieces (5).

As can be seen in figure 3, the terminal (6) of the sidepieces (5) can be adjusted manually, thanks to the material with which it is made, having provided a hole for it (8) to attach an elastic strap (7), which in addition can optionally be a strap that is fitted directly after the articulated parts (4) to replace the sidepieces (5).

Having described the nature of this invention in detail, as well as the way of putting it into practice, it is not considered necessary to give a more extensive explanation for any expert in the field to understand its scope and the benefits that arise from it, noting that, within its essentiality, it may be implemented in other forms of manufacture that differ in detail to that indicated as an example, and which will also give the protection sought as long as its fundamental principle is not altered, changed or modified.

## Claims

1. CHILDREN'S GLASSES, which configured from a frame (2), made up of the support frame for the lens (3), on the side ends of which are fitted sidepieces (5) with curved terminals (6) and/or an elastic strap(7), are **characterised by** these sidepieces (5) or elastic strap (7) fitted to the ends of the frame (2) using articulated parts (4) in a zig-zag shape that allow them to be bent both inwards, or inside of the glasses, as well as outwards or outside of the glasses; and because both the frame (2) as well as the sidepieces (5), terminals (6) and articulated parts (4) are made of a flexible silicon-based material.

2. CHILDREN'S GLASSES, according to claim 1, characterised because each articulated part (4) shows: at one of their ends, a first protuberance (4a) suitable to lodge inserted in a housing provided at the ends of the frame (2) ; in its central area, a winding shape determined by both entries (4b) on opposite sides of it separated by a centre partition (4c) ; and on its opposite end a second protuberance (4d) that is inserted into a housing provided in the end of the sidepieces (5).

3. MANUFACTURING PROCESS of glasses, such as those described in any of the claims 1 or 2 characterised because both the frame (2) as well as the sidepieces (5), the terminal (6) and the articulated parts (4) of the glasses are manufactured and obtained by a thermomoulding process made from a flexible silicone-based material.

4. MANUFACTURING PROCESS according to claim 3, characterised because the flexible material used in the thermomoulding process is Siliflex™.

5. MANUFACTURING PROCESS according to claim 3 or 4, characterised because they have a transparent appearance in variable colours, which is obtained through the inclusion of the coloured pigments in the very thermo-moulding process.
